Europäisches Patentamt

European Patent Office

Office européen des brevets

(11) Veröffentlichungsnummer: **0 316 823 B1**

(12) EUROPÄISCHE PATENTSCHRIFT

(45) Veröffentlichungstag der Patentschrift: **04.03.92**

(21) Anmeldenummer: **88118890.8**

(22) Anmeldetag: **12.11.88**

(51) Int. Cl.⁵: **A01B 3/421**, A01B 15/14

(54) **Drehpflug.**

(30) Priorität: **18.11.87 DE 8715281 U**

(43) Veröffentlichungstag der Anmeldung:
**24.05.89 Patentblatt 89/21**

(45) Bekanntmachung des Hinweises auf die
Patenterteilung:
**04.03.92 Patentblatt 92/10**

(84) Benannte Vertragsstaaten:
**AT CH DE ES FR GB LI NL SE**

(56) Entgegenhaltungen:
**EP-A- 0 012 997**
**EP-A- 0 094 551**
**DE-A- 2 413 331**
**DE-U- 8 634 657**

(73) Patentinhaber: **H. Niemeyer Söhne GmbH &
Co. KG**
**Heinrich-Niemeyer-Strasse 52**
**W-4446 Hörstel-Riesenbeck(DE)**

(72) Erfinder: **Barlage, Bruno, Dipl.-Ing.**
**Beethovenstrasse 13**
**W-4446 Hörstel(DE)**
Erfinder: **Laumann, Bernhard**
**Lindenstrasse 6**
**W-4446 Hörstel(DE)**

(74) Vertreter: **Busse & Busse Patentanwälte**
**Postfach 1226 Grosshandelsring 6**
**W-4500 Osnabrück(DE)**

## Beschreibung

Die Erfindung bezieht sich auf einen Drehpflug einer Ausbildung gemäß dem Oberbegriff des Anspruchs 1.

Bei einem bekannten Drehpflug dieser Art (DE-GM 86 34 657) sind die Stellvorrichtungen von Hydraulikzylindern gebildet, die bei gleichsinniger Betätigung ein Verschwenken des Pflugrahmens um dessen Gelenkachse mit dem Schiebestück ermöglichen, wie es bei Drehvorgängen zur Erhöhung der Bodenfreiheit des Pflugendes erwünscht ist, und die bei Sperrung eines Hydraulikzylinders und Beaufschlagung des anderen eine Verstellung der Ausrichtung des Pflugrahmens zum Schiebestück ermöglichen, wie es für den Pflugbetrieb unter veränderten Betriebsbedingungen, z.B. bei geänderter Schnittbreite, wünschenswert ist.

Es ist ferner ein Drehpflug bekannt (EP-C 94 551), bei dem der Pflugrahmen mit der Wendewelle um eine in den Arbeitsstellungen etwa lotrechte Gelenkachse schwenkbar verbunden ist, sich in seinem Vorderbereich und im Bereich der Gelenkachse über Führungen auf der Wendewelle abstützt, einen in den Arbeitstellungen etwa in Höhe der Mittelachse der Wendewelle gelegenen Schwerpunkt besitzt und beim Drehe aus der ersten in die zweite Arbeitsstellung und umgekehrt jeweils mit seiner Pflugkörperseite über die Wendewelle hinwegdreht. Dabei ist als Stellvorrichtung zum Verschwenken des Pflugrahmens um die Gelenkachse seiner Gelenkverbindung mit der Wendewelle eine Stellvorrichtung in Gestalt einer zwischen dem Anbaugestell und dem Pflugrahmen in dessen Vorderbereich zwischengeordneten, längeneinstellbaren Lenkerstange vorgesehen, die gelenkig mit einem Anschlußpunkt am Pflugrahmen verbunden ist und an einem vertikal im Abstand unter der Mittelachse der Wendewelle am Anbaugestell angeordneten Anschlußpunkt gelenkig angreift. Bei einer derartigen Pflugausbildung erfolgt eine rein mechanische Verschwenkung des Pflugrahmens während und in direkter Abhängigkeit von den Drehvorgängen.

Der Erfindung liegt die Aufgabe zugrunde, einen Drehpflug der im Oberbegriff des Anspruchs 1 angegebenen Art zu schaffen, der während eines jedes Drehvorganges eine kontinuierliche, von der Drehbewegung abgeleitete mechanische Verschwenkung des Pflugrahmens zum Zwecke der Erhöhung der Bodenfreiheit ohne Einstellungsveränderungen der Betriebseinstellungen im übrigen erlaubt.

Die Erfindung löst diese Aufgabe mit den Merkmalen des Anspruchs 1. Hinsichtlich wesentlicher weiterer Ausgestaltungen wird auf die Ansprüche 2 bis 5 verwiesen.

Der erfindungsgemäße Drehpflug ermöglicht mit überaus einfachen mechanischen Mitteln eine Verschwenkung des Pflugrahmens um die Gelenkachse seiner Verbindung mit dem Schiebestück bei Drehvorgängen, während gleichzeitig eine einfache Einstellung der Ausrichtung des Pflugrahmens zum Schiebestück in Abhängigkeit von Querverstellungen des Schiebestücks in der Kulisse möglich sind, ohne daß der Verschwenkungsvorgang während der Drehvorgänge hierdurch beeinträchtigt wird.

Dies gilt auch für Pflüge mit kontinuierlicher Schnittbreitenverstellung, bei der für die Verstellung der Schnittbreite eine Veränderung der Ausrichtung des Pflugrahmens zum Schiebestück vorzunehmen ist, die mit einem Verschwenken der Pflugkörper in deren Gelenkabstützung am Pflugrahmen einhergeht. Auch bei einer derartigen Pflugausführung ermöglicht die Erfindung das Verschwenken des Pflugrahmens relativ zum Schiebestück während Drehvorgängen unabhängig von einer Änderung der Grundeinstellung der Rahmenausrichtung zum Schiebestück und der Pflugkörperstellung zum Pflugrahmen auf einfachem mechanischem Wege.

Bei der Pflugausführung ist die Bedienung außerordentlich einfach, da für Drehvorgänge lediglich das Steuerventil für den Drehantrieb des Pfluges betätigt werden muß. Das Verschwenken des Pflugrahmens ist eine vom Drehantrieb mechanisch abgeleitete Bewegung, die kontinuierlich und vollständig während des Drehvorganges abläuft.

Weitere Einzelheiten und Vorteile ergeben sich aus der nachfolgenden Beschreibung und der Zeichnung, in der zwei Ausführungsbeispiele des Gegenstands der Erfindung schematisch näher veranschaulicht sind. In der Zeichnung zeigen:

Fig. 1 eine abgebrochene Draufsicht auf eine erste Ausführung eines Drehpfluges nach der Erfindung,

Fig. 2 einen Schnitt nach der Linie II-II in Fig. 1, und

Fig. 3 eine Draufsicht ähnlich Fig. 1 auf eine zweite Ausführung eines Drehpfluges nach der Erfindung.

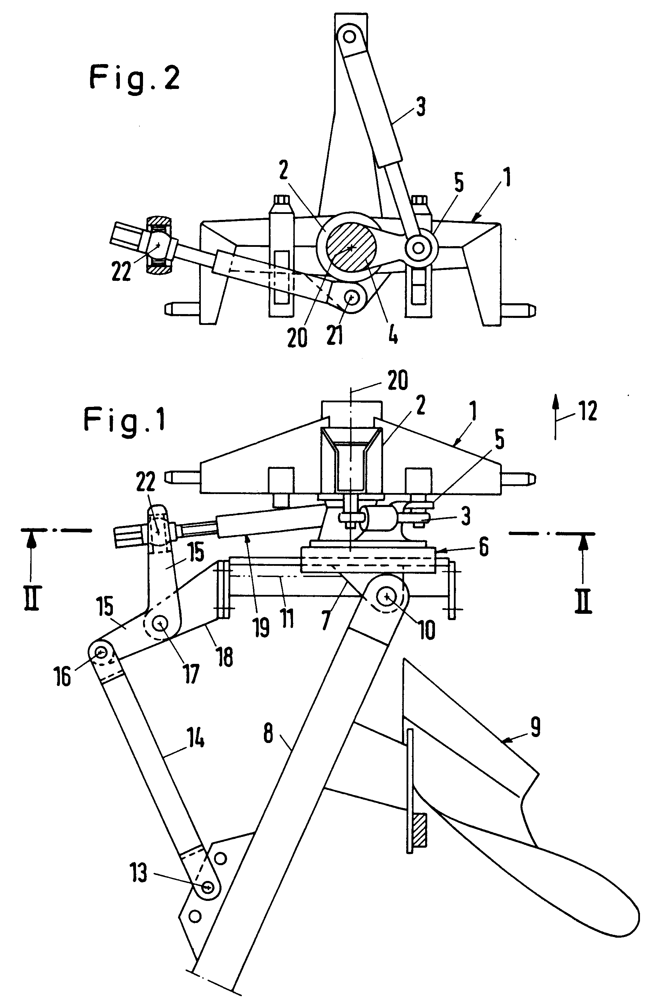

Der in Fig. 1 und 2 veranschaulichte Drehpflug umfaßt im einzelnen ein mit der Dreipunkthydraulik eines landwirtschaftlichen Zugfahrzeugs verbindbares Anbaugestell 1, eine in einem Lager 2 des Anbaugestells 1 schwenkbar gelagerte und mittels einer Antriebsvorrichtung 3, insbesondere einem Hydraulikzylinder, aus einer ersten Arbeitsstellung um etwa 180° in eine zweite Arbeitsstellung drehbare Wendewelle 4, deren mit der Antriebsvorrichtung verbundener Schwenkhebel mit 5 bezeichnet ist, eine mit der Wendewelle 4 verbundene Kulisse 6, die in den Arbeitsstellungen des Drehpfluges eine horizontale Querführung für ein Schiebestück 7 bildet, und einen Pflugrahmen oder -baum 8, der eine Anzahl, z.B. drei oder vier, Pflugkörper 9 abstützt und an seinem vorderen Ende mit dem Schiebestück 7 um eine in den Arbeitsstellungen des Drehpfluges etwa lotrechte Gelenkachse 10 schwenkbar verbunden ist. Das Schiebestück 7 ist in der Kulisse 6 mittels einer in Fig. 1 nur schematisch durch eine strichpunktierte Linie angedeuteten Stellvorrichtung 11, z.B. einer Schraubstellspindel, quer zur Zugrichtung 12 horizontal verschieb- und feststellbar, um die Arbeitsstellung des ersten Pflugkörpers 9 verstellen und an das jeweils benutzte Zugfahrzeug, insbesondere die Spurweite von Schlepperrädern, anpassen zu können.

Der Pflugrahmen 8 ist an einem der nebeneinander angeordneten Anschlußpunkte 13 gelenkig mit einer Stellstrebe 14 verbunden, die vorzugsweise Längeneinstellbar ausgebildet ist. Das andere Ende dieser Stellstrebe 14 greift an einem ersten freien Ende eines als Winkelhebel ausgebildeten Doppelhebels 15 bei 16 gelenkig an, und dieser Doppelhebel 15, der bei 17 an einem Tragstück 18 an der Kulisse 6 schwenkbar gelagert ist, ist an seinem zweiten freien Ende mit einer Lenkerstange 19 gelenkig verbunden, die ihrerseits an einem im Abstand vertikal unter der Mittelachse 20 der Wendewelle 4 am Anbaugestell 1 angeordneten Anschlußpunkt 21 gelenkig angreift. Die Gelenkverbindung der Lenkerstange bei 22 ist ebenso wie die Gelenkverbindung bei 21 bevorzugteine Kugelgelenkverbindung.

Durch die Längeneinstellbarkeit der Lenkerstange 19 allein oder in Verbindung mit der Längeneinstellbarkeit der Stellstrebe 14 kann dem Pflugrahmen 8 eine bestimmte Ausrichtung zum Schiebestück 7 vorgegeben werden. Wird eine Querverstellung des Schiebestücks 7 in seiner Kulisse 6 vorgenommen, kann durch die Längenveränderung beispielsweise der Lenkerstange 19 die Ausrichtung des Pflugrahmens 8 wieder herbeigeführt werden. Wenige einfache Handgriffe genügen daher, um jederzeit eine gewünschte Grundeinstellung der Ausrichtung der Teile zueinander vorzunehmen bzw. wiederherzustellen.

Wird der Pflugrahmen durch Betätigung des Drehantriebs 3 aus der in Fig. 1 und 2 veranschaulichten Arbeitsstellung um etwa 180° in seine andere Arbeitsstellung gedreht, so erzwingt die Lenkerstange 19 eine Schwenkbewegung des Doppelhebels 15 um dessen Schwenkachse 17 mit der Folge, daß der Pflugrahmen 8, der mit seiner Scharseite beim Drehen über die Wendewelle 4 hinwegbewegt wird, eine Verschwenkung um die Gelenkachse 10 in Fig. 1 entgegen Uhrzeigersinn erfährt, durch die während des Drehvorganges vorübergehend die Bodenfreiheit erhöht und zugleich der Schwerpunkt der Pflugrahmen/Pflugkörper-Baugruppe an eine gedachte Verlängerung der Mittelachse der Drehwelle herangerückt wird.

Die einfachen Bauteile 14,15 und 19 sichern dabei zuverlässig und dauerhaft eine reine mechanische Verschwenkung des Pflugrahmens 8, die mit dem Beginn der Drehbewegung der Wendewelle 4 einsetzt und mit deren Abschluß beendet ist. Daher bestimmt lediglich der eine Hydraulikantrieb 3 den Ablauf des Geschehens.

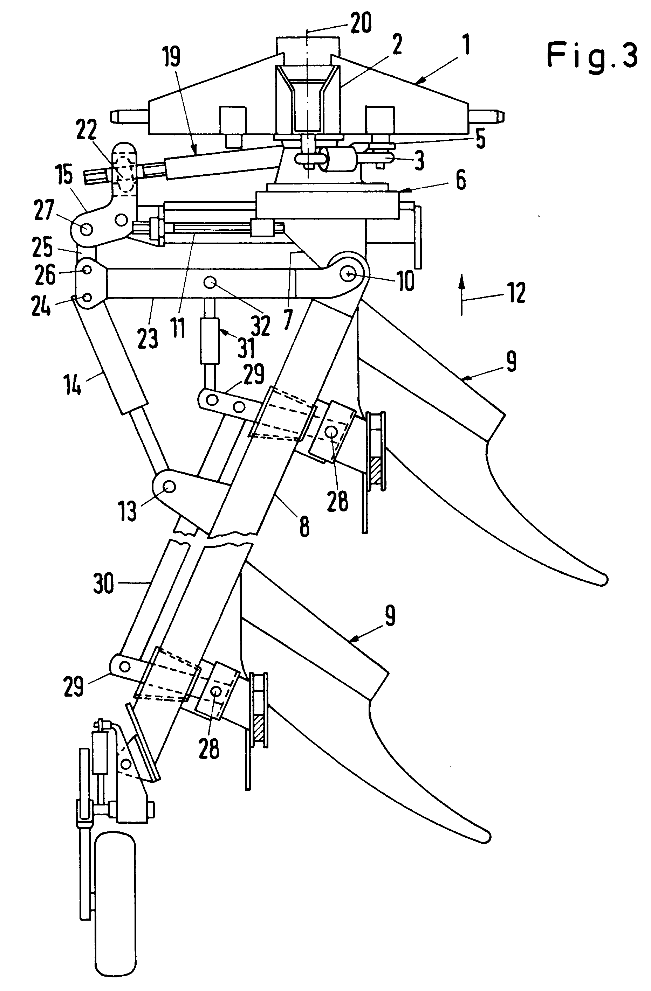

Dies gilt auch für die Pflugausführung gemäß Fig. 3, bei der der Drehpflug mit einer stufenlosen Schnittbreitenverstellung versehen ist. Der in seinem Grundaufbau dem Drehpflug nach Fig. 1 und 2 entsprechende und hinsichtlich übereinstimmender Teile mit gleichen Bezugszeichen versehene Drehpflug nach Fig. 3 umfaßt einen um die Achse 10 der Gelenkverbindung zwischen dem Pflugrahmen 8 und dem Schiebestück 7 an letzterem schwenkbar angreifenden Zwischenhebel 23, an dessen freien Ende die Stellstrebe 14 für den Pflugrahmen 8 bei 24 gelenkig angreift. Ferner greift an dem freien Ende des Zwischenhebels 23 ein Zwischenlenker 25 gelenkig bei 26 an, der an seinem anderen Ende bei 27 am ersten freien Ende des Doppelhebels 15 angelenkt ist.

Die Pflugkörper 9 sind jeweils um in den Arbeitsstellungen im wesentlichen lotrechte Achsen 28 schwenkbar am Pflugrahmen 8 abgestützt und über Hebel 29 verstellbar, die zur Synchronisierung der Verstellbewegung und zur gemeinsamen Festlegung der Pflugkörper 9 in ihrer eingestellten Lage durch eine Stellstange 30 verbunden sind. An dem vordersten Hebel 29 bzw. an der Stange 30 greift eine weitere Stellvorrichtung 31, z.B. ein Spannschloß, an, die andererseits bei 32 am Zwischenhebel 23 abgestützt ist.

Wie der Zeichnung ohne weiteres entnommen werden kann, kann auch bei dieser Pflugausführung dem Pflugrahmen 8 eine Grundausrichtung zum Schiebestück 7 vorgegeben werden, wie sie mit Rücksicht auf die Stellung des Schiebestücks 7 in der Kulisse 6 bzw. die Schnittbreiteneinstellung erwünscht ist. Diese Grundausrichtung ist unabhängig von der Verschwenkung des Pflugrahmens 8 um die Gelenkachse 10 bei Drehbewegungen, die wiederum über die Teile 14,15,19 unter zusätzlicher Einbeziehung der Teile 23,25 vollzogen wird.

Bei beiden Ausführungen des erfindungsgemäßen Drehpfluges werden die Stellvorrichtung für die Ausrichtung des Pflugrahmens 8 zum Schiebestück 7 in den Arbeitsstellungen des Drehpfluges sowie die Stellvorrichtung für ein Verschwenken des Pflugrahmens 8 um die Gelenkachse 10 bei Drehbewegungen des Drehpfluges von den gleichen Bauteilen gebildet, d.h. beide Stellvorrichtungen sind in einer gemeinschaftlichen mechanischen Stellvorrichtung 14,15,19 bzw. 14,15,19,23,26 verschmolzen.

**Patentansprüche**

1. Drehpflug mit einem mit der Dreipunkthydraulik eines landwirtschaftlichen Zugfahrzeugs verbindbaren Anbaugestell (1), einer in einem Lager (2) des Anbaugestells (1) schwenkbar gelagerten und mittels einer Antriebsvorrichtung (3) aus einer ersten Arbeitsstellung in eine zweite Arbeitsstellung drehbaren Wendewelle (4), einer mit der Wendewelle (4) verbundenen, eine in den Arbeitsstellungen horizontale Querführung für ein querverstellbares Schiebestück (7) bildenden Kulisse (6), einem Pflugkörper (9) tragenden Pflugrahmen (8), der mit dem Schiebestück (7) um eine in den Arbeitsstellungen etwa lotrechte Gelenkachse (10) schwenkbar verbunden ist, einer Stellvorrichtung zum Einstellen der Ausrichtung des Pflugrahmens (8) zum Schiebestück (7) in den Arbeitsstellungen des Drehpfluges und mit einer Stellvorrichtung zum Verschwenken des Pflugrahmens (8) um die Gelenkachse (10) seiner Gelenkverbindung mit dem Schiebestück (7) bei Drehvorgängen des Drehpfluges, dadurch gekennzeichnet, daß der Pflugrahmen (8) über eine mit diesem gelenkig verbundene Stellstrebe (14) am ersten freien Ende eines an der Kulisse schwenkbar gelagerten Doppelhebels (15) gelenkig angreift, und daß das zweite freie Ende des Doppelhebels (15) mit einer längeneinstellbaren Lenkerstange (19) gelenkig verbunden ist, die an einem im Abstand vertikal unter der Mittelachse (20) der Wendewelle (4) am Anbaugestell (1) angeordneten Anschlußpunkt (21) gelenkig angreift.

2. Drehpflug nach Anspruch 1, dadurch gekennzeichnet, daß der Doppelhebel (15) als Winkelhebel ausgebildet ist.

3. Drehpflug nach Anspruch 1 oder 2, dadurch gekennzeichnet, daß die Stellstrebe (14) längeneinstellbar ausgebildet ist.

4. Drehpflug nach einem der Ansprüche 1 bis 3, dadurch gekennzeichnet, daß am Pflugrahmen (8) mehrere Anschlußpunkte (13) für die Stellstrebe (14) im Abstand nebeneinander angeordnet sind.

5. Drehpflug nach einem der Ansprüche 1 bis 4, mit einem um die Achse (10) der Gelenkverbindung zwischen Pflugrahmen (8) und Schiebestück (7) an letzterem schwenkbar angreifenden Zwischenhebel (23), mit durch Schwenkhebel (29) schwenkverstellbar am Pflugrahmen (8) abgestützten Pflugkörpern (9) und mit einer am Zwischenhebel (23) angreifenden Stellvorrichtung (31) zur gemeinsamen Ein- und Feststellung der Pflugkörper (9) über deren durch eine Stellstange (30) verbundenen Schwenkhebel (29), dadurch gekennzeichnet, daß das erste freie Ende des Doppelhebels (15) über einen Zwischenlenker (25) mit dem freien Ende des Zwischenhebels (23) und letzteres gelenkig mit der Stellstrebe (14) für den Pflugrahmen (8) verbunden ist.

## Claims

1. A reversible plough comprising a mounting frame (1) adapted to be connected to the three-point hydraulic system of an agricultural tractor vehicle, a reversing shaft (4) mounted in a bearing (2) in the mounting frame (1) and adapted to be rotated by means of a drive device (3) out of a first working position into a second working position, and with, connected to the reversing shaft (4) and horizontal in the working positions, a transverse guide for a sliding block (6) which constitutes a transversely displaceable sliding member (7), a plough frame (8) carrying a ploughshare (9) and connected to the sliding member (7) so that it is pivotable about an axis (10) of articulation which is substantially vertical in the working positions, and with a positioning device for adjusting the orientation of the plough frame (8) in relation to the sliding member (7) in the working positions of the reversible plough and with a positioning device for pivoting the plough frame (8) about the axis (10) of articulation of its articulated connection to the sliding member (7) during turning manoeuvres by the reversible plough, characterised in that the plough frame (8), via a positioning strut (14) articulatingly connected to the plough frame (8), articulatingly engages the first free end of a double-armed lever (15) mounted pivotably on the sliding block, and in that the second free end of the double-armed lever (15) is articulatingly connected to a longitudinally adjustable radius rod (19) which articulatingly engages a connection point (21) disposed on the mounting frame (1) disposed at a distance vertically below the central axis (20) of the reversing shaft (4).

2. A reversible plough according to Claim 1, characterised in that the double-armed lever (15) is constructed as an angled lever.

3. A reversible plough according to Claim 1 or 2, characterised in that the positioning strut (14) is longitudinally adjustable.

4. A reversible plough according to one of Claims 1 to 3, characterised in that there are on the plough frame (8) a plurality of spaced apart connection points (13) for the positioning strut (14).

5. A reversible plough according to one of Claims 1 to 4, with an intermediate lever (23) pivotably engaging the sliding member (7) and pivotable about the axis (10) of the articulated connection between plough frame (8) and sliding member (7) and with ploughshares (9) supported on the plough frame (8) for pivotable adjustment by means of pivot levers (29) and with, engaging the intermediate lever (23), a positioning device (31) for the joint adjustment and locking of the ploughshares (9) via their pivot levers (29) which are connected by a positioning rod (30), characterised in that the first free end of the double-armed lever (15) is connected via an intermediate link (25) to the free end of the intermediate lever (23) while this latter is articulatingly connected to the positioning strut (14) for the plough frame (8).

**Revendications**

1. Charrue brabant comportant un châssis d'attelage (1) destiné à être fixé à un tracteur à usage agricole, un axe de retournement (4) tournant dans un palier (2) du châssis d'attelage (1), en y étant monté de manière pivotante, commandé par un dispositif d'entraînement (3) pour passer d'une première disposition de travail dans une seconde position de travail, avec une coulisse (6) reliée à l'axe de retournement (4), et qui dans l'une des positions de travail forme un moyen de guidage transversal horizontal pour une pièce coulissante (7) réglable transversalement, un age (8) portant un versoir (9), cet age étant relié de manière pivotante autour d'un axe d'articulation (10) sensiblement vertical pour l'une des positions de travail, un dispositif de réglage pour régler l'alignement de l'age (8) par rapport à la pièce coulissante (7) dans l'une des positions de travail de la charrue et un dispositif de réglage pour retourner l'age (8) autour de l'axe d'articulation (10) dans sa liaison articulée avec la pièce coulissante (7) lors des opérations de retournement de la charrue, charrue caractérisée en ce que l'age (8) est relié de manière articulée par une biellette de réglage (14) reliée de façon articulée à l'age, au niveau de sa première extrémité libre à un levier à deux bras (15) monté pivotant sur la coulisse, et en ce que la seconde extrémité libre du levier à deux bras (15) est reliée de manière articulée à un bras de guidage (19) de longueur réglable, qui est lui-même relié de manière articulée à un point d'accrochage (21) prévu sur le châssis d'attelage (1), à une certaine distance verticalement sous l'axe central (20) de l'axe de retournement (4).

2. Charrue brabant selon la revendication 1, caractérisée en ce que le levier à deux bras (15) est un levier coudé.

3. Charrue brabant selon la revendication 1 ou 2, caractérisée en ce que la biellette de réglage (14) est réglable en longueur.

4. Charrue brabant selon l'une des revendications 1 à 3, caractérisée par plusieurs points de raccordement (13) prévus sur l'age (8) pour la biellette de réglage (14), ces plusieurs points étant disposés les uns à côté des autres.

5. Charrue brabant selon l'une des revendications 1 à 4 comportant un levier intermédiaire (23) relié à l'axe (10) de la liaison articulée entre l'age (8) et la pièce coulissante (7) en étant relié à celle-ci de manière articulée, un versoir (9) qui s'appuie sur l'age (8) par un levier pivotant (29), réglable en pivotement, et un dispositif de réglage (31) agissant sur le levier intermédiaire (23) pour le réglage et la fixation simultanés du versoir (9) par l'intermédiaire d'un levier pivotant (29) relié par une barre de réglage (30), charrue caractérisée en ce que la première extrémité libre du levier à deux bras (15) est reliée à l'extrémité libre du levier intermédiaire (23) par un bras intermédiaire (25) et le levier intermédiaire est relié de manière articulée à la biellette de réglage (14) de l'age (8).

Fig.2

Fig.1

Fig.3